# EUROPÄISCHE PATENTSCHRIFT

(11) **EP 0 925 987 B1**
(45) Veröffentlichungstag und Bekanntmachung des Hinweises auf die Patenterteilung: **23.05.2001**
(21) Anmeldenummer: 98124160.7
(22) Anmeldetag: 19.12.1998
(51) Int. Cl.: B60K 17/346

(54) **Antriebsanordnung**
Drive train arrangement
Arrangement de chaîne de traction

(30) Priorität: 22.12.1997 DE 19757232
(43) Veröffentlichungstag der Anmeldung: 30.06.1999
(73) Patentinhaber: AUDI AG, 85045 Ingolstadt (DE)
(72) Erfinder: Fleischmann, Hans-Peter, 85134 Stammham (DE); Scheffel, Torsten, 85049 Ingolstadt (DE); Märkl, Johann, 85128 Nassenfels (DE); Schenker, Mario, 85049 Ingolstadt (DE)

(56) Entgegenhaltungen:
- EP-A- 0 179 991
- GB-A- 2 189 854

## Beschreibung

Die Erfindung betrifft eine Antriebsanordnung für ein an einer vorderen und einer hinteren Achse antreibbares Kraftfahrzeug, gemäß dem Oberbegriff des Patentanspruches 1.

Eine derartige Antriebsanordnung zeigt beispielsweise die auf die Anmelderin zurückgehende Patentanmeldung DE 34 36 759 A1, bei der an dem getriebenen Scheibensatz des stufenlosen Getriebes unmittelbar ein Abtriebszahnrad vorgesehen ist, welches auf ein Kegelrad-Differential als Zwischenachsdifferential für eine vordere und eine hintere antreibbare Achse des Kraftfahrzeuges angeordnet ist.

Aufgabe der Erfindung ist es, eine Antriebsanordnung der gattungsgemäßen Art vorzuschlagen, die eine besonders kompakte und robuste Konstruktion insbesondere bei in dem Getriebegehäuse integriertem Differential für die eine antreibbare Achse ermöglicht.

Diese Aufgabe wird erfindungsgemäß mit den kennzeichnenden Merkmalen des Patentanspruches 1 gelöst. Vorteilhafte Weiterbildungen der Erfindung sind den weiteren Patentansprüchen entnehmbar.

Erfindungsgemäß wird vorgeschlagen, das Zwischenachsdifferential, bevorzugt ein selbstsperrendes Torsen-Differential, in den getriebenen Scheibensatz des stufenlosen Getriebes zu integrieren, wobei der Durchtrieb zur einen Achse durch den Scheibensatz hindurch erfolgt.

Durch diese Anordnung wird eine besonders kompakte Konstruktion erzielt, die zudem aufgrund des Entfalls eines Zahnradsatzes bzw. eines Zahneingriffs auch einen verbesserten Getriebewirkungsgrad ergibt. Bevorzugt ist dabei der getriebene Scheibensatz auf einer Hohlwelle angeordnet, deren eines Ende mittelbar oder unmittelbar das Ausgleichsgehäuse des Zwischenachsdifferentiales trägt. Daraus resultiert ein herstellungstechnisch günstiges Bauteil hoher Biege und Torsionssteifigkeit in der gesamten Anordnung.

Dabei kann baulich vorteilhaft der bevorzugt rotationssymetrische Außenumfang des Ausgleichsgehäuses des Zwischenachsdifferentials unmittelbar als Führung für einen Abschnitt der axial verstellbaren Scheibenhälfte des getriebenen Scheibensatzes des stufenlosen Getriebes dienen und somit der Teile- und Montageaufwand verringert werden.

Die Ansprüche 6 bis 9 beschreiben zusätzlich eine bevorzugte, für einen Kegelabtrieb auf ein benachbartes Achsdifferential ausreichend steife Lagerung der Hohlwelle mit dem Zwischenachsdifferential, der durch die Hohlwelle sich hindurch erstreckenden Abtriebswelle und des auf der Hohlwelle angeordneten, getriebenen Scheibensatzes des stufenlosen Getriebes.

Die Ansprüche 10 bis 15 betreffen zudem vorteilhafte Ausgestaltungen des integrierten Torsen-Zwischendifferentiales hinsichtlich der Krafteinleitung und Beölung.

Ein Ausführungsbeispiel der Erfindung ist im folgenden mit weiteren Einzelheiten näher erläutert. Die anliegende Zeichnung zeigt einen abschnittsweisen Längsschnitt durch eine Antriebsanordnung mit einem stufenlosen Getriebe mit einem antreibenden und einem getriebenen Scheibensatz für ein Zugmittel und mit einem Zwischenachsdifferential.

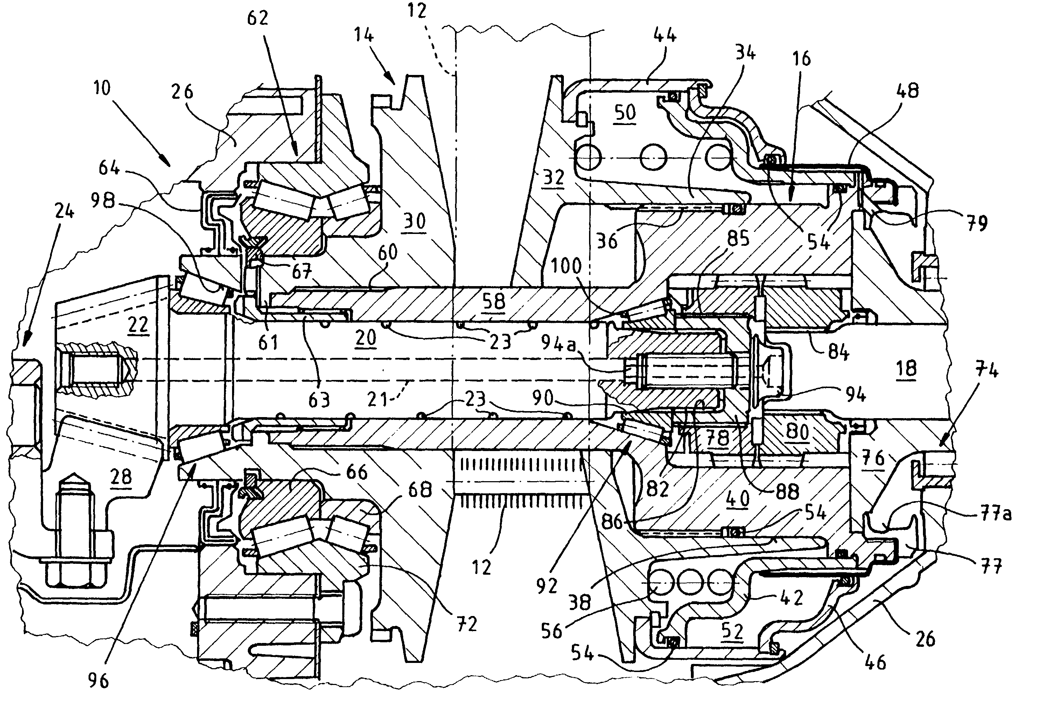

In der Zeichnung ist mit 10 allgemein eine Antriebsanordnung bezeichnet, die soweit nicht dargestellt der eingangs genannten DE 34 36 759 A1 entsprechen kann und die einen treibenden Scheibensatz (nicht dargestellt) eines stufenlosen Getriebes aufweist, der über ein Zugmittel, z. B. eine Gliederkette 12, auf einen getriebenen Scheibensatz 14 wirkt.

Das Antriebsmoment wird von dem getriebenen Scheibensatz 14 über ein Torsen-Zwischenachsdifferential 16 auf eine erste Abtriebswelle 18 für den Antrieb eines Achsdifferentiales an einer hinteren Achse des Kraftfahrzeuges (nicht dargestellt) und über eine zweite Abtriebswelle 20 und ein unmittelbar angeformtes Kegelrad-Antriebsritzel 22 auf ein in dem allgemein mit 26 bezeichneten Getriebegehäuse angeordnetes Vorderachsdifferential 24 mit einem Tellerrad 28 übertragen.

Der Scheibensatz 14 weist eine Festscheibe 30 und eine hydraulisch axial verstellbare Scheibe 32 auf.

Die Scheibe 32 ist mittels eines angeformten Ringabschnittes 34 über eine Verzahnung 36 in Umfangsrichtung formschlüssig auf dem Außenumfang 38 des Ausgleichsgehäuses 40 des Torsen-Zwischenachsdifferentiales 16 geführt.

Ferner trägt dieses Ausgleichsgehäuse 40 eine im Querschnitt stufenförmige Ringwand 42, die im Zusammenwirken mit einem weiteren Ringabschnitt 44 der Scheibe 32, einer daran befestigten Ringwand 46 und einer Führungshülse 48 zwei hydraulisch beaufschlagbare Kammern 50,52 begrenzt (vgl. obere und untere Hälfte der Zeichnung mit unterschiedlichen Stellungen der hydraulisch verstellbaren Scheibe 32).

Entsprechende Dichtringe zur Abdichtung der hydraulischen Kammern 50,52 sind einheitlich mit 54 bezeichnet; ferner ist in der Hydraulikkammer 50 eine die Scheibe 32 in axialer Richtung vorspannende Schraubendruckfeder 56 vorgesehen.

Das Ausgleichsgehäuse 40 des Zwischenachsdifferentiales 16 ist unmittelbar an eine Hohlwelle 58 angeformt, durch die hindurch sich die Abtriebswelle 20 erstreckt. Die Hohlwelle 58 trägt in Umfangsrichtung über ein Verzahnung 60 verdrehfest und über einen radial nach innen ragenden Ringbund 61 axial unverschiebbar von einer Hohlschraube 63 gehalten die Festscheibe 30, wobei die Festscheibe 30 über ein doppelt wirkendes Kegelrollenlager 62 im Getriebegehäuse 26 drehbar gelagert und zugleich in beiden Richtungen axial unverschiebbar abgestützt, sowie mittels eines Wellendichtringes 64 zum Vorderachsdifferntial 24 hin abgedichtet ist.

Das Kegelrollenlager 62 weist dabei zwei Innenringe 66,68 und einen mit einem Befestigungsflansch versehenen Außenring 72 sowie in entsprechenden Winkeln angeordnete Kegelrollen auf. Die Innenringe 66,68 sind mittels eines in die Festscheibe 30 eingesprengten Sicherungsringes 67 gesichert. Ein weiteres Rollenlager 74 ist am anderen Ende der Hohlwelle 58 an einem an das Ausgleichsgehäuse 40 des Zwischenachsdifferentiales 16 vorgesehendem Abschlußdeckel 76 angeordnet, durch den hindurch sich die Abtriebswelle 18 erstreckt.

Der Abschlußdeckel 76 ist mittels eines Gewinderinges 77 an dem Ausgleichsgehäuse 40 befestigt. Der Gewindering 77 weist eine innenliegende Umfangsnut 77a auf, über die über einen radialen Kanal 79 Getriebe-Spritzöl aufgrund der Zentrifugalwirkung in die Hydraulikkammer 52 gefördert wird und dort in bekannter Weise eine Fliehkraftkompensierung zur Hydraulikkammer 50 bewirkt.

Die beiden Abtriebswellen 18,20 tragen jeweils über Verzahnungen 82,84 Zahnräder 78,80, die mit den nicht dargestellten Ausgleichsrädern im Ausgleichsgehäuse 40 des Torsen-Zwischenachsdifferentiales 16 trieblich verbunden sind. Das Torsen-Zwischenachsdifferential 16 ist ein "parallel axis Torsen" (PAT)-Differential, wie es z. B. in der Patentanmeldung DE 40 27 422 A1 im Detail beschrieben ist.

Das Zahnrad 78 sitzt dabei über eine Keilverzahnung 85 auf einer zusätzlich mit einer Innenkeilverzahnung 86 versehenen Zwischenhülse 88, die unter axialer Einspannung eines Innenringes 90 eines ersten Kegelrollenlagers 92 im Bereich des Ausgleichsgehäuses 40 mittels einer Schraube 94 auf der Abtriebswelle 20 gehalten ist.

Ein weiteres Kegelrollenlager 96 ist im Bereich des Abtriebsritzels 22 vorgesehen, dessen Außenlaufbahn unmittelbar an einem ringförmigen Fortsatz 98 des Festrades 30 eingeschliffen ist. Gleiches trifft auf das Kegelrollenlager 92 zu, dessen Außenlaufbahn ebenfalls durch einen eingeschliffenen Innenkonus 100 im Bereich des Ausgleichsgehäuses 40 gebildet ist. Die beiden Kegelrollenlager 92,96 sind dabei in O-Anordnung vorgesehen, um insbesondere neben einer definierten Lagervorspannung in beiden Axialrichtungen die aus dem Kegeltrieb 22,28 resultierenden Axialkräfte auf der Zeichnung nach rechts wirksam abzustützen.

Zur Beölung des Zwischenachsdifferentiales 16 ist ein zum Achsdifferential 24 offener Zentralkanal 21 in der Abtriebswelle 20 vorgesehen, der z. B. über einen an das Abtriebsritzel 22 stirnseitig anschließenden Öl-Speicherbehälter (nicht dargestellt) mit Schmieröl versorgt wird. Das Schmieröl gelangt über den Zentralkanal 21 und eine Axialbohrung 94a in der Schraube 94 in das Ausgleichsgehäuse 40. Von dort wird es über eine Umfangs-Spiralnut 23 an der Abtriebswelle 20 zur Herstellung eines Ölkreislaufes wieder zurückgefördert.

## Patentansprüche

1. Antriebsanordnung für ein an einer vorderen und hinteren Achse antreibbares Kraftfahrzeug bestehend aus einem stufenlosen Getriebe mit einem antreibenden und einem getriebenen Scheibensatz (14) für ein Zugmittel (12) und aus einem Zwischenachsdifferential (16), dadurch gekennzeichnet, daß das Zwischenachsdifferential (16) in den getriebenen Scheibensatz (14) integriert ist, wobei der Durchtrieb zur einen Achse (24) durch den Scheibensatz (14) hindurch erfolgt.

2. Antriebsanordnung nach Anspruch 1, dadurch gekennzeichnet, daß der Scheibensatz (14) auf einer Hohlwelle (58) angeordnet ist, deren eines Ende das Ausgleichsgehäuse (40) des Zwischenachsdifferentiales (16) trägt.

3. Antriebsanordnung nach den Ansprüchen 1 und 2, dadurch gekennzeichent, daß das Ausgleichsgehäuse (40) unmittelbar an die Hohlwelle (58) angeformt ist.

4. Antriebsanordnung nach den Ansprüchen 1 - 3, dadurch gekennzeichnet, daß der Außenumfang (38) des Ausgleichsgehäuses (40) unmittelbar als Führung für einen Abschnitt (34) der axial verstellbaren Scheibenhälfte (32) des Scheibensatzes (14) dient.

5. Antriebsanordnung nach einem oder mehreren der Ansprüche 1 - 4, dadurch gekennzeichnet, daß das Zwischenachsdifferential (16) ein Torsendifferential ist.

6. Antriebsanordnung nach einem oder mehreren der Ansprüche 1 - 5, dadurch gekennzeichnet, daß die die Hohlwelle (58) durchdringende Abtriebswelle (20) unmittelbar das Antriebsritzel (22) eines Kegeltriebes (22,28) eines der Achsdifferentiale (24) trägt und daß das Antriebsritzel (22) in der Hohlwelle (58) und die Hohlwelle (58) in einer Gehäusewand (26) des Getriebes (10) über Kegelrollenlager (62,92,96) axial und radial abgestützt bzw. gelagert sind.

7. Antriebsanordnung nach Anspruch 6, dadurch gekennzeichnet, daß das gehäuseseitige Kegelrollenlager (62) unmittelbar auf der Festscheibe (30) des angetriebenen Schreibensatzes (14) angeordnet ist, wobei die Festscheibe (32) auf die Hohlwelle (58) aufgesteckt und über eine Keilverzahnung (60) und einen radial nach innen ragenden Ringbund (61) axial und in Drehrichtung formschlüssig über eine Hohlschraube (63) gehalten ist.

8. Antriebsanordnung nach einem oder mehreren der Ansprüche 1 - 7, dadurch gekennzeichnet, daß das Kegelrollenlager (62) an der Festscheibe (32) ein doppelseitig wirkendes Kegelrollenlager ist.

9. Antriebsanordnung nach einem oder mehreren der vorhergehenden Ansprüche, dadurch gekennzeichnet, daß die Abtriebswelle (20) in der Hohlwelle (58) über Kegelrollenlager (92,96) in O-Anordnung gelagert ist.

10. Antriebsanordnung nach einem oder mehreren der Ansprüche 1 - 9, dadurch gekennzeichnet, daß das Zahnrad (78) des Torsen-Zwischenachsdifferentiales (16) über eine Zwischenhülse (88) mit einer Innenkeilverzahnung (82) und einer Außenkeilverzahnung (85) mit der Abtriebswelle (20) formschlüssig verbunden ist.

11. Antriebsanordnung nach Anspruch 10, dadurch gekennzeichnet, daß die Zwischenhülse (88) mittels einer in die Abtriebswelle (20) eingeschraubten Schraube (94) gehalten ist.

12. Antriebsanordnung nach einem oder mehreren der Ansprüche 1 - 11, dadurch gekennzeichnet, daß die Beölung des geschlossen ausgebildeten Zwischenachsdifferentiales (16) über einen zum Achsdifferential (24) offenen Zentralkanal (21) in der Abtriebswelle (20) und durch die Schraube (94) hindurch erfolgt.

13. Antriebsanordnung nach einem oder mehreren der Ansprüche 1 - 12, dadurch gekennzeichnet, daß der an das Ausgleichsgehäuse (40) des Zwischenachsdifferentiales (16) anschließende Abschlußdeckel (76) mittels eines Gewinderinges (77) befestigt ist.

14. Antriebsanordnung nach Anspruch 13, dadurch gekennzeichnet, daß über eine innere Umfangsnut (77a) des Gewinderinges (77) und radiale Kanäle (79) Getriebeöl zur Fliehkraftkompensation in eine Kammer (52) der hydraulischen Betätigung des Scheibensatzes (14) förderbar ist.

15. Antriebsanordnung nach Anspruch 12, dadurch gekennzeichnet, daß um die Antriebswelle (20) eine Spiralnut (23) eingearbeitet ist, die Getriebeöl aus dem Ausgleichsgehäuse (40) des Zwischenachsdifferentiales (16) herausfördert (Ölkreislauf).

## Claims

1. Drive arrangement for a front and rear axle driven motor vehicle, comprising an infinitely variable gearing with a driving and a driven set of plates (14) for a pulling means (12) and an intermediate axle differential (16), **characterised in that** the intermediate axle differential (16) is integrated into the driven set of plates (14), and the drive through to one axle (24) is performed through the set of plates (14).

2. Drive arrangement according to Claim 1, **characterised in that** the set of plates (14) is arranged on a hollow shaft (58) the one end of which supports the equalising housing (40) of the intermediate axle differential (16).

3. Drive arrangement according to Claims 1 and 2, **characterised in that** the equalising housing (40) is moulded directly onto the hollow shaft (58).

4. Drive arrangement according to Claims 1 - 3, **characterised in that** the outside circumference (38) of the equalising housing (40) serves directly as a guide for a section (34) of the axially adjustable plate half (32) of the set of plates (14).

5. Drive arrangement according to one or more of Claims 1 - 4, **characterised in that** the intermediate axle differential (16) is a torsional differential.

6. Drive arrangement according to one or more of Claims 1 - 5, **characterised in that** the output shaft (20), which passes through the hollow shaft (58), directly supports the drive pinion (22) of a conical drive (22, 28) of one of the axle differentials (24), and the drive pinion (22) is axially or radially supported or mounted in the hollow shaft (58), and the hollow shaft (58) in a housing wall of the gearing (10) via conical roller bearings (62, 92, 96).

7. Drive arrangement according to Claim 6, **characterised in that** the conical roller bearing (62) at the housing is arranged directly on a fixed plate (30) of the driven set of plates (14), and the fixed plate (32) is pushed onto the hollow shaft (48) and, via a wedge toothing (60) and a radically inward protruding collar (61) held axially and positively in the direction of rotation via a hollow bolt (63).

8. Drive arrangement according to one or more of Claims 1 - 7, **characterised in that** the conical roller bearing (62) on the fixed plate is a doublesidedly acting conical roller bearing.

9. Drive arrangement according to one or more of the above claims, **characterised in that** the drive shaft (20) is mounted in the hollow shaft (58) via conical roller bearings (92, 96) in an O-arrangement.

10. Drive arrangement according to one or more of Claims 1 - 9, **characterised in that** the toothed wheel (78) of the torsional intermediate axle differential (16) is positively joined via an intermediate sleeve (88) to an inner wedge toothing (82) and an outer cone toothing (85) to the output shaft (20).

11. Drive arrangement according to Claim 10, **characterised in that** the intermediate sleeve (88) is held by means of a bolt (94) which is screwed into the output shaft (20).

12. Drive arrangement according to one or more of Claims 1 - 11, **characterised in that** oiling of the intermediate axle differential of sealed design is carried out via a central channel (21), which is open towards the axle differential (24), in the output shaft (20) and through bolt (94).

13. Drive arrangement according to one or more of Claims 1 - 12, **characterised in that** the closing cover (76), which is adjacent the equalising housing (40) of the intermediate axle differential (16), is mounted by means of a threaded ring (77).

14. Drive arrangement according to Claim 13, **characterised in that** gear oil can be conveyed for centrifugal compensation in a chamber (52) for hydraulic operation of the set of plates (14) via an inner peripheral groove (77a) of the threaded ring (77) and radial channels (79).

15. Drive arrangement according to Claim 12, **characterised in that** around the driveshaft (20) is established a spiral groove (23) which conveys gear oil out of the equalising housing (40) of the intermediate axle differential (16) (oil circulation).

## Revendications

1. Dispositif d'entraînement pour un véhicule automobile susceptible d'être entraîné par les essieux avant et arrière, constitué d'une transmission à variation progressive continue avec un jeu de poulies menantes (14) et un jeu de poulies menées (14), pour un moyen de traction (12), et d'un différentiel central (16), caractérisé en ce que le différentiel central (16) est intégré dans le jeu de poulies menées (14), la transmission du mouvement vers un essieu (24) s'effectuant au moyen du jeu de poulies (14).

2. Dispositif d'entraînement selon 1a revendication 1, caractérisé en ce que le jeu de poulies (14) est disposé sur un arbre creux (58), dont une extrémité porte le carter de compensation (40) du différentiel central (16).

3. Dispositif d'entraînement selon les revendications 1 et 2, caractérisé en ce que le carter de compensation (40) est formé d'un seul tenant, directement sur l'arbre creux (58).

4. Dispositif d'entraînement selon les revendications 1 à 3, caractérisé en ce que la périphérie extérieure (38) du carter de compensation (40) sert directement de guidage à un tronçon (34) de la poulie-moitié (32), réglable axialement, du jeu de poulies (14).

5. Dispositif d'entraînement selon l'une ou plusieurs des revendications 1 à 4, caractérisé en ce que le différentiel central (16) est un différentiel à effet de torsion.

6. Dispositif d'entraînement selon l'une ou plusieurs des revendications 1 à 5, caractérisé en ce que l'arbre mené (20), traversant l'arbre creux (58), porte directement le pignon d'entraînement (22) d'une transmission à roue conique (22, 28) d'un des différentiels d'essieu (24), et en ce que le pignon d'entraînement (22) est soutenu ou monté à rotation axialement et radialement dans l'arbre creux (58) et l'arbre creux (58) est soutenu ou monté à rotation axialement et radialement dans une paroi de carter (26) de la transmission (10) , par l'intermédiaire de roulements à rouleaux coniques (62, 92, 96).

7. Dispositif d'entraînement selon la revendication 6, caractérisé en ce que le roulement à rouleaux coniques (62) situé côté carter est disposé sur la poulie fixe (30) du jeu de poulies entraînées (14), la poulie fixe (30) étant enfichée sur l'arbre creux (58) et est maintenue, par l'intermédiaire d'une denture de cannelure (60) et d'une collerette annulaire (61) faisant saillie radialement vers l'intérieur, avec une liaison par ajustement de forme agissant axialement et dans le sens de rotation, par l'intermédiaire d'une vis creuse (63).

8. Dispositif d'entraînement selon l'une ou plusieurs des revendications 1 à 7, caractérisé en ce que le roulement à rouleaux coniques (62) prévu sur la poulie fixe (30) est un roulement à rouleaux coniques soutenant un effort orienté dans deux sens opposés.

9. Dispositif d'entraînement selon l'une ou plusieurs des revendications précédentes, caractérisé en ce que l'arbre mené (20) est monté à rotation dans l'arbre creux (58) par l'intermédiaire de roulements à rouleaux coniques (92, 96) placés en un agencement en O.

10. Dispositif d'entraînement selon l'une ou plusieurs des revendications 1 à 9, caractérisé en ce que la roue dentée (78) du différentiel central à torsion (16) est reliée, par une liaison à ajustement de forme, par l'intermédiaire d'un manchon intermédiaire (88), à une denture conique intérieure (82) et, par une denture conique extérieure (85), à l'arbre mené (20).

11. Dispositif d'entraînement selon la revendication 10, caractérisé en ce que le manchon intermédiaire (88) est maintenu au moyen d'une vis (94), vissée dans l'arbre mené (20).

12. Dispositif d'entraînement selon l'une ou plusieurs des revendications 1 à 11, caractérisé en ce que la lubrification du différentiel central (16) fermé s'effectue par l'intermédiaire d'un canal central (21) débouchant vers le différentiel d'essieu (24) ménagé dans l'arbre mené (20) et traversant la vis (94).

13. Dispositif d'entraînement selon l'une ou plusieurs des revendications 1 à 12, caractérisé en ce que le couvercle de fermeture (76), se raccordant au carter de compensation (40) du différentiel central (16), est fixé au moyen d'une bague filetée (77) .

14. Dispositif d'entraînement selon la revendication 13, caractérisé en ce que de l'huile de transmission est susceptible d'être véhiculée par l'intermédiaire d'une gorge périphérique intérieure (77a) de la bague filetée (77) et de canaux radiaux (79), afin d'assurer une compensation de la force centrifuge dans une chambre (52) du dispositif d'actionnement hydraulique du jeu de poulies (14).

15. Dispositif d'entraînement la revendication 12, caractérisé en ce que, autour de l'arbre d'entraînement (20) est ménagée une gorge spirale (23), qui extrait (circuit d'huile) de l'huile de transmission, depuis le carter de compensation (40) du différentiel central (16).
